# EUROPEAN PATENT APPLICATION

(11) **EP 4 756 753 A1**
(43) Date of publication of application: **10.06.2026**
(21) Application number: 25218851.1
(22) Date of filing: 26.11.2025
(51) Int. Cl.: G07C 9/00, B60R 25/24, B60R 25/25, H04L 9/40, H04W 4/80, H04W 12/06

(54) **SYSTEM, TERMINAL APPARATUS, AND METHOD**

(30) Priority: 09.12.2024 JP 2024214718
(71) Applicant: Toyota Jidosha Kabushiki Kaisha, Toyota-shi, Aichi-ken 471-8571 (JP)
(72) Inventor: SUGIMOTO, Shingo, Toyota-shi, Aichi-ken, 471-8571 (JP); ITO, Yuma, Toyota-shi, Aichi-ken, 471-8571 (JP); HABU, Keiichiro, Toyota-shi, Aichi-ken, 471-8571 (JP); NISHIOKA, Isao, Toyota-shi, Aichi-ken, 471-8571 (JP)
(74) Representative: Simmons & Simmons

(57) **Abstract**

A terminal apparatus (10) includes a memory (12) that stores first identification information for identifying a user, a communication unit (13) that performs communication with a smart key (20) including an NFC tag that stores second identification information for identifying the user, the smart key corresponding to a vehicle of the user and being held by the user, and a control unit (11) configured to read the second identification information from the NFC tag via the communication unit (13), determine whether the first identification information matches the second identification information, and when the first identification information matches the second identification information, authenticate the user.

## Description

### BACKGROUND OF THE INVENTION

### 1. Field of the Invention

The present disclosure relates to a system, a terminal apparatus, and a method.

### 2. Description of Related Art

In related art, there is a technique of authenticating a user. For example, Japanese Unexamined Patent Application Publication No. 2024-021821 (JP 2024-021821 A) discloses a mobile device that plays a role as a relay between a card key and an authentication unit by reading the card key and performing authentication in coordination with the authentication unit of a vehicle.

### SUMMARY OF THE INVENTION

In the related art, authentication cannot be performed unless the vehicle is located nearby. There is room for improvement in convenience of a user upon user authentication.

A terminal apparatus according to the present disclosure includes:
a memory that stores first identification information for identifying a user;
a communication unit that performs communication with a smart key including an NFC tag that stores second identification information for identifying the user, the smart key corresponding to a vehicle of the user and being held by the user; and a control unit that reads the second identification information from the NFC tag via the communication unit,
determines whether the first identification information matches the second identification information, and when the first identification information matches the second identification information, authenticates the user.

A method according to the present disclosure is a method to be executed by a terminal apparatus including a memory that stores first identification information for identifying a user, a communication unit, and a control unit, the method including:
by the terminal apparatus,
performing communication with a smart key including an NFC tag that stores second identification information for identifying the user via the communication unit, the smart key corresponding to a vehicle of the user and being held by the user;
reading the second identification information from the NFC tag; and
determining whether the first identification information matches the second identification information and when the first identification information matches the second identification information, authenticating the user.

According to the present disclosure, it is possible to improve convenience of a user upon user authentication.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a view illustrating a schematic configuration of a system according to a first embodiment;
FIG. 2 is a flowchart indicating an operation example of the system according to the first embodiment; and
FIG. 3 is a flowchart indicating an operation example of a system according to a second embodiment.

### DETAILED DESCRIPTION OF EMBODIMENTS

### First Embodiment

A first embodiment of the present disclosure will be described below with reference to the drawings. In the respective drawings, the same reference numerals are assigned to the same or corresponding portions. In the description of the present embodiment, the description of the same or corresponding portions will be omitted or simplified, as appropriate.

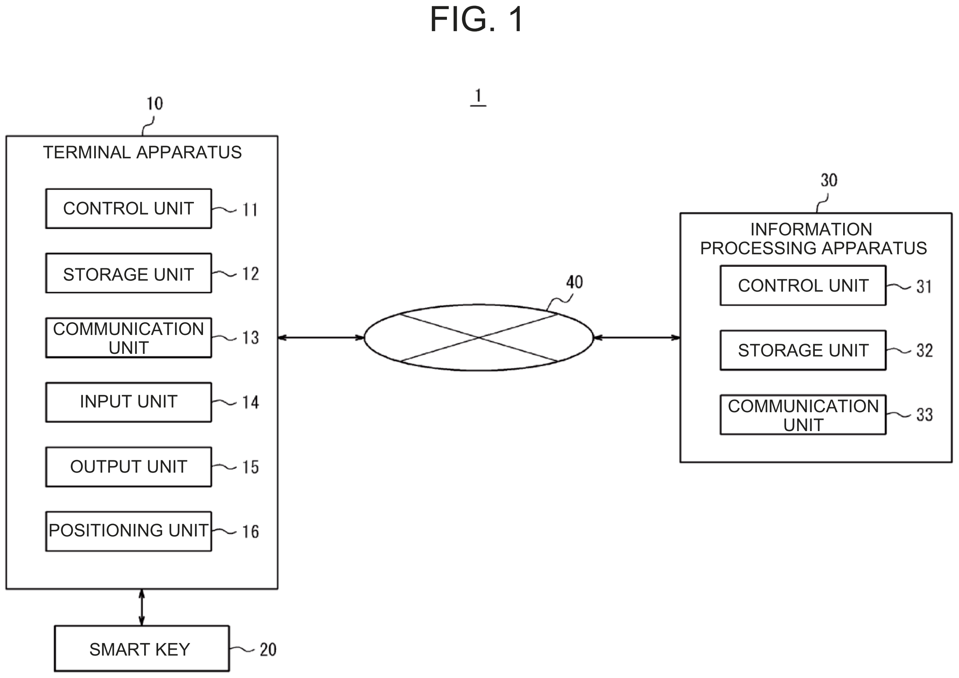

A configuration of a system 1 according to the present embodiment will be described with reference to FIG. 1. The system 1 includes a terminal apparatus 10, a smart key 20, and an information processing apparatus 30. The terminal apparatus 10 and the information processing apparatus 30 are communicably connected to each other via a network 40 including, for example, the Internet. As will be described below, the terminal apparatus 10 is communicably connected to the smart key 20.

The terminal apparatus 10 is utilized by a user. The terminal apparatus 10 is, for example, mobile equipment such as a mobile phone, a smartphone, or a tablet, or a PC. "PC" is an abbreviation for personal computer. The terminal apparatus 10 stores first identification information. Second identification information which will be described below can be received from the smart key 20 through near field communication. The near field communication includes communication conforming to standards of NFC, standards of Bluetooth (registered trademark), and the like. "NFC" is an abbreviation for near field communication.

The smart key 20 is connected to a vehicle on which the user gets on in a wireless manner and performs locking, unlocking, and the like, of a door of the vehicle. The smart key 20 includes an NFC tag that stores the second identification information for identifying the user. The NFC tag includes a memory that stores the second identification information and an antenna. The smart key 20 may store vehicle identification information for identifying the vehicle in addition to the second identification information.

The vehicle is an arbitrary type of vehicle such as, for example, a gasoline vehicle, a diesel vehicle, a hydrogen vehicle, an HEV, a PHEV, a BEV or an FCEV. "HEV" is an abbreviation for hybrid electric vehicle. "PHEV" is an abbreviation for plug-in hybrid electric vehicle. "BEV" is an abbreviation for battery electric vehicle. "FCEV" is an abbreviation for fuel cell electric vehicle. The vehicle may be driven by a driver or driving may be automated in an arbitrary level. The level of automation is, for example, one of level 1 to level 5 in levels of SAE. "SAE" is an abbreviation for society of automotive engineers. The vehicle may be a vehicle dedicated for MaaS. "MaaS" is an abbreviation for mobility as a service. The vehicle includes a control unit that controls operation of respective units, a positioning unit that measures a position of the vehicle, a communication unit that performs communication with external apparatuses, an output unit that displays information, an in-vehicle camera that captures an image of at least one of a circumference and an interior of the vehicle, and various kinds of sensors that detect states of the respective units of the vehicle.

The information processing apparatus 30 is a computer provided in a facility such as a data center. The information processing apparatus 30 is, for example, a server belonging to a cloud computing system or other computing systems.

The network 40 includes the Internet, at least one WAN, at least one MAN or any combination thereof. "WAN" is an abbreviation for wide area network. "MAN" is an abbreviation for metropolitan area network. The network 40 may include at least one wireless network, at least one optical network or any combination thereof. The wireless network is, for example, an ad hoc network, a cellular network, a wireless LAN, a satellite communication network, or a terrestrial microwave network. "LAN" is an abbreviation for local area network.

First, outline of the present embodiment will be described, and details will be described later. The terminal apparatus 10 stores the first identification information for identifying a user. The terminal apparatus 10 performs communication with the smart key including the NFC tag that stores the second identification information for identifying the user, the smart key corresponding to the vehicle of the user and being held by the user. The terminal apparatus 10 reads the second identification information from the NFC tag, determines whether the first identification information matches the second identification information, and authenticates the user when the first identification information matches the second identification information.

Each of the first identification information and the second identification information is information capable of uniquely identifying the user and includes a national identification number. Each of the first identification information and the second identification information is not limited to this and may be an insurance card number, a license number, or the like. According to the present embodiment, user authentication is performed only the terminal apparatus 10 being waved over the smart key 20, so that it is possible to save trouble of the user such as input work of a password for starting an application. It is rare that both the smart key 20 and the terminal apparatus 10 are possessed by a person other than the user himself/herself, so that it is possible to perform authentication with high reliability. It is therefore possible to improve convenience of the user upon user authentication.

A configuration of the terminal apparatus 10 according to the present embodiment will be described with reference to FIG. 1. The terminal apparatus 10 includes a control unit 11, a storage unit 12, a communication unit 13, an input unit 14, an output unit 15, and a positioning unit 16.

The control unit 11 includes at least one processor, at least one programmable circuit, at least one dedicated circuit or any combination thereof. The processor is a general-purpose processor such as a CPU or a GPU, or a dedicated processor dedicated for specific processing. "CPU" is an abbreviation for central processing unit. "GPU" is an abbreviation for graphics processing unit. The programmable circuit is, for example, an FPGA. "FPGA" is an abbreviation for field-programmable gate array. The dedicated circuit is, for example, an ASIC. "ASIC" is an abbreviation for application specific integrated circuit. The control unit 11 executes processing regarding operation of the terminal apparatus 10 while controlling the respective units of the terminal apparatus 10.

The storage unit 12 includes at least one semiconductor memory, at least one magnetic memory, at least one optical memory or any combination thereof. The semiconductor memory is, for example, a RAM, a ROM, or a flash memory. "RAM" is an abbreviation for random access memory. "ROM" is an abbreviation for read only memory. The RAM is, for example, an SRAM or a DRAM. "SRAM" is an abbreviation for static random access memory. "DRAM" is an abbreviation for dynamic random access memory. The ROM is, for example, an EEPROM. "EEPROM" is an abbreviation for electrically erasable programmable read only memory. The flash memory is, for example, an SSD. "SSD" is an abbreviation for solid-state drive. The magnetic memory is, for example, an HDD. "HDD" is an abbreviation for hard disk drive. The storage unit 12 functions as, for example, a main storage apparatus, an auxiliary storage apparatus or a cache memory. In the storage unit 12, information to be used for operation of the terminal apparatus 10, and information obtained by the operation of the terminal apparatus 10 are stored.

The communication unit 13 includes at least one communication module. The communication module is, for example, a module conforming to wired LAN communication standards such as Ethernet (registered trademark) or wireless LAN communication standards such as IEEE 802.11. "IEEE" is an abbreviation for the institute of electrical and electronics engineers. The communication unit 13 performs communication with an apparatus other than the terminal apparatus 10. The communication unit 13 receives the information to be used for the operation of the terminal apparatus 10 or transmits the information obtained by the operation of the terminal apparatus 10 via the network 40.

The input unit 14 includes at least one input interface. The input interface is, for example, a physical key, a capacitive key, a pointing device, a touch screen integrally provided with a display, a camera or a microphone. The input unit 14 accepts operation of inputting data to be used for the operation of the terminal apparatus 10. The input unit 14 may be connected to the terminal apparatus 10 as external input equipment instead of being included in the terminal apparatus 10. As a connection interface, an interface conforming to standards of USB, HDMI (registered trademark), Bluetooth, or the like, can be used. "USB" is an abbreviation for universal serial bus. "HDMI" is an abbreviation for high-definition multimedia interface.

The output unit 15 includes at least one output interface. The output interface is, for example, a display or a speaker. The display is, for example, an LCD or an organic EL display. "LCD" is an abbreviation for liquid crystal display. "EL" is an abbreviation for electroluminescent. The output unit 15 outputs data obtained by the operation of the terminal apparatus 10. The output unit 15 may be connected to the terminal apparatus 10 as external output equipment instead of being included in the terminal apparatus 10. As a connection interface, an interface conforming to standards of USB, HDMI, Bluetooth, or the like, can be used.

The positioning unit 16 includes at least one GNSS receiver. "GNSS" is an abbreviation for global navigation satellite system. The GNSS includes, for example, at least one of GPS, QZSS, BeiDou, GLONASS and Galileo. "GPS" is an abbreviation for global positioning system. "QZSS" is an abbreviation for quasi-zenith satellite system. A satellite of the QZSS is referred to as a quasi-zenith satellite. "GLONASS" is an abbreviation for global navigation satellite system. The positioning unit 16 includes a geomagnetic sensor and an acceleration sensor. The positioning unit 16 can detect a position of the terminal apparatus 10. Information indicating the position of the terminal apparatus 10 detected by the positioning unit 16 is acquired by the control unit 11 as terminal position information.

A configuration of the information processing apparatus 30 according to the present embodiment will be described with reference to FIG. 1. The information processing apparatus 30 includes a control unit 31, a storage unit 32, and a communication unit 33.

The control unit 31 includes at least one processor, at least one programmable circuit, at least one dedicated circuit or any combination thereof. The processor is a general-purpose processor such as a CPU or a GPU or a dedicated processor dedicated for specific processing. The programmable circuit is, for example, an FPGA. The dedicated circuit is, for example, an ASIC. The control unit 31 executes processing regarding operation of the information processing apparatus 30 while controlling respective units of the information processing apparatus 30.

The storage unit 32 includes at least one semiconductor memory, at least one magnetic memory, at least one optical memory or any combination thereof. The semiconductor memory is, for example, a RAM, a ROM, or a flash memory. The RAM is, for example, an SRAM or a DRAM. The ROM is, for example, an EEPROM. The flash memory is, for example, an SSD. The magnetic memory is, for example, an HDD. The storage unit 32 functions as, for example, a main storage apparatus, an auxiliary storage apparatus, or a cache memory. In the storage unit 12, information to be used for operation of the information processing apparatus 30, and information obtained by the operation of the information processing apparatus 30 are stored.

The communication unit 33 includes at least one communication interface. The communication interface is, for example, a LAN interface. The communication unit 33 receives data to be used for the operation of the information processing apparatus 30 and transmits data obtained by the operation of the information processing apparatus 30.

Functions of the terminal apparatus 10 or the information processing apparatus 30 are implemented by a program according to the present embodiment being executed by the processor as the control unit 11 or the control unit 31. In other words, the functions of the terminal apparatus 10 or the information processing apparatus 30 are implemented by software. The program causes a computer to function as the terminal apparatus 10 or the information processing apparatus 30 by causing the computer to execute the operation of the terminal apparatus 10 or the information processing apparatus 30. In other words, the computer functions as the terminal apparatus 10 or the information processing apparatus 30 by executing the operation of the terminal apparatus 10 or the information processing apparatus 30 in accordance with the program.

The program can be stored in a non-transitory computer-readable medium. The non-transitory computer-readable medium is, for example, a flash memory, a magnetic recording apparatus, an optical disk, a magnetooptical recording medium, or a ROM. The program is distributed by, for example, a portable recording medium such as an SD card, a DVD, a CD-ROM, or the like, in which the program is recorded being sold, given or lent. "SD" is an abbreviation for secure digital. "DVD" is an abbreviation for digital versatile disc. "CD-ROM" is an abbreviation for compact disc read only memory. The program may be distributed by storing the program in a storage of a server and transferring the program to another computer from the server. The program may be provided as a program product.

The computer temporarily stores a program stored in a portable medium or a program transferred from the server into a main storage apparatus, for example. Then, the computer reads the program stored in the main storage apparatus by the processor and executes processing in accordance with the read program by the processor. The computer may directly read a program from a portable medium and execute processing in accordance with the program. The computer may successively execute, each time a program is transferred to the computer from the server, processing in accordance with the received program. The processing may be executed by a so-called ASP-type service that implements functions by only giving an instruction of execution and acquiring a result without transferring the program from the server to the computer. "ASP" is an abbreviation for application service provider. The program includes information that is provided for processing by an electronic computer and that is equivalent to a program. For example, data that is not a direct command for a computer but has a property that defines processing of the computer corresponds to "information equivalent to a program".

Some or all of the functions of the terminal apparatus 10 or the information processing apparatus 30 may be implemented by a programmable circuit or a dedicated circuit serving as the control unit 11 or the control unit 31. In other words, some or all of the functions of the terminal apparatus 10 or the information processing apparatus 30 may be implemented by hardware.

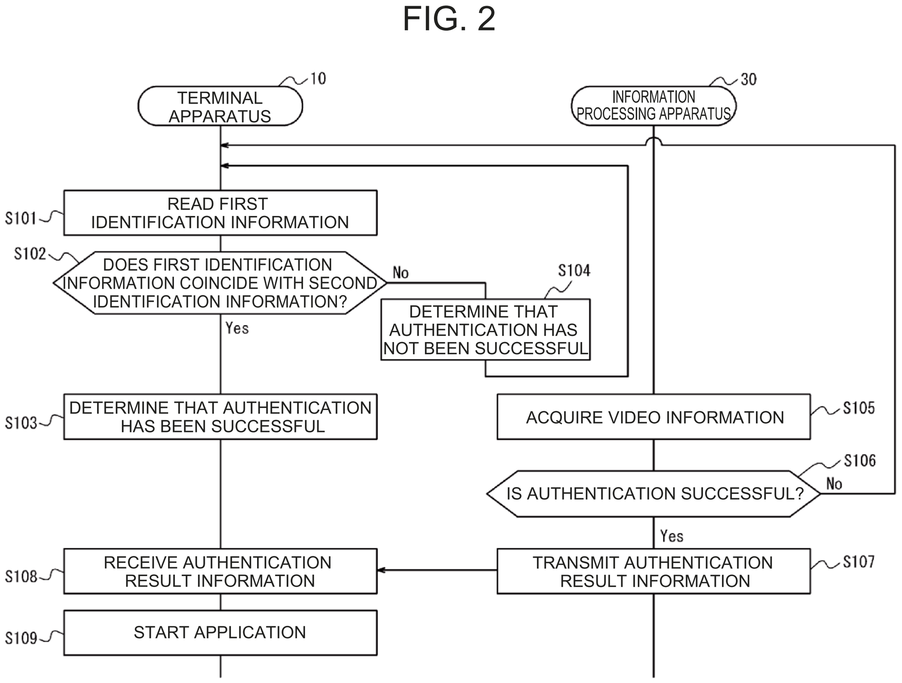

Operation of the system 1 according to the present embodiment will be described with reference to FIG. 2. Among the operation in FIG. 2, operation of the terminal apparatus 10 corresponds to a method according to the present embodiment. In the following description, it is assumed that the terminal apparatus 10 performs communication with external apparatuses via the communication unit 13 and the network 40. In the following description, it is assumed that the information processing apparatus 30 performs communication with external apparatuses via the communication unit 33 and the network 40.

In S101, the control unit 11 of the terminal apparatus 10 reads the first identification information from the NFC tag of the smart key 20 via the communication unit 13. The control unit 11 may further read the vehicle identification information from the NFC tag of the smart key 20 via the communication unit 13.

The control unit 11 may further perform communication with another smart key different from the smart key 20 and read third identification information stored in an NFC tag included in the other smart key. The other smart key is held by the user in addition to the smart key 20. The other smart key is connected to the vehicle in a wireless manner in a similar manner to the smart key 20 to perform locking, unlocking, and the like, of the door of the vehicle. The third identification information is information for identifying the user. The third identification information may include, for example, a national identification number.

In S102, the control unit 11 checks the read second identification information against the first identification information stored in the storage unit 12 to determine whether the first identification information matches the second identification information. When the first identification information matches the second identification information, in S103, the control unit 11 determines that the authentication using the smart key 20 has been successful, and the operation of the system 1 proceeds to S105. When the first identification information does not match the second identification information, in S104, the control unit 11 determines that the authentication using the smart key 20 has not been successful, and the operation of the system 1 returns to S101. Note that after the control unit 11 determines that the authentication using the smart key 20 has been successful in S103, the operation of the system 1 may proceed to S109, and the control unit 11 may start an application regarding the vehicle corresponding to the smart key 20.

When the third identification information is further read from the other smart key in S101, the control unit 11 may further check the third identification information against the first identification information. When the first identification information matches the second identification information, and the first identification information matches the third identification information, the control unit 11 determines that the authentication using the smart key 20 and the other smart key has been successful in S103, and the operation of the system 1 proceeds to S105. When the first identification information does not match the second identification information or when the first identification information does not match the third identification information, the control unit 11 determines that the authentication using the smart key 20 and the other smart key has not been successful in S104, and the operation of the system 1 returns to S101. Note that after the control unit 11 determines that the authentication using the smart key 20 and the other smart key has been successful in S103, the operation of the system 1 may proceed to S109, and the control unit 11 may start the application regarding the vehicle corresponding to the smart key 20 and the other smart key.

In S105, the control unit 31 of the information processing apparatus 30 acquires video information indicating a video including the user.

For example, the control unit 11 of the terminal apparatus 10 first transmits a user instruction to transmit the video to the information processing apparatus 30, to the vehicle. A control unit of the vehicle receives the user instruction and controls an in-vehicle camera included in the vehicle to transmit the captured video to the information processing apparatus 30. The present disclosure is not limited to this, and the video information indicating the video including the user may be transmitted to the information processing apparatus 30, for example, from a camera of a store in which the vehicle is placed.

In S106, the control unit 31 determines whether the authentication has been successful based on the video information. When it is determined that the authentication has been successful, the operation of the system 1 proceeds to S107. When it is determined that the authentication has not been successful, the operation of the system 1 returns to S101.

For example, the control unit 31 acquires feature information indicating action of the user by extracting a feature amount of the action of the user from the video indicated by the video information using an arbitrary image analysis method. The feature information includes a feature amount of a speed, an acceleration, an angle, a direction or a trajectory in movement of the hand or the foot of the user. The action of the user includes, for example, action of the user such as how the user walks, a way of opening/closing the door of the vehicle, how the user sits on a seat of the vehicle, a way of gripping a steering wheel of the vehicle, and a way of adjusting a mirror of the vehicle. The control unit 31 specifies the feature amount of the user from a database which is stored in advance in the storage unit 32 and in which feature amounts of various kinds of action of each user are accumulated, and determines whether the specified feature amount matches the feature amount indicated by the feature information. When the specified feature amount matches the feature amount indicated by the feature information, the control unit 31 determines that the authentication based on the video information has been successful. When the specified feature amount does not match the feature amount indicated by the feature information, the control unit 31 determines that the authentication based on the video information has not been successful.

In S107, the control unit 31 transmits authentication result information indicating that the user has been authenticated to the terminal apparatus 10.

In S108, the control unit 11 of the terminal apparatus 10 receives the authentication result information.

In S109, the control unit 11 starts the application regarding the vehicle corresponding to the smart key 20. The application may be downloaded and stored in advance in the storage unit 12. Then, the operation of the system 1 ends.

The application is, for example, an application for registering various kinds of information of the user who is an owner of the vehicle. In S101, when the control unit 11 reads the vehicle identification information stored in the NFC tag of the smart key 20, the control unit 11 may register the vehicle identification number on the application as information of the user. Specifically, the control unit 11 transmits the vehicle identification information to a server that provides the application via the communication unit 13. The control unit of the server records the vehicle identification information and a user identifier in the database in association with each other. The server may be the same as or different from the information processing apparatus 30.

The application may be an application for controlling the respective units of the vehicle. The control of the respective units specifically includes locking or unlocking of the door of the vehicle, turning ON or OFF of an air conditioning apparatus, adjustment of a position of a seat, and the like. The control unit 11 accepts a user input on the application and transmits an instruction of control to the vehicle via the communication unit 13. The control unit of the vehicle receives the instruction and controls the respective units. For example, the control unit of the vehicle performs locking or unlocking of the door, turning ON or OFF of the air conditioning apparatus, adjustment of the position of the seat, and the like.

The application may be an application for displaying a state of the vehicle. The state of the vehicle specifically includes a remaining fuel amount, a distance to empty, and the like, of the vehicle. The control unit 11 accepts a user input of an instruction to acquire the state on the application and transmits the instruction to acquire the state to the vehicle via the communication unit 13. The control unit of the vehicle receives the instruction, acquires the information regarding the state of the vehicle from each sensor and transmits the information to the terminal apparatus 10. The control unit 11 receives the information and can display the information at the output unit 15.

According to the present embodiment, in addition to the authentication by the smart key 20 and the terminal apparatus 10, authentication based on action specific to the user can be performed at the information processing apparatus 30, so that it is possible to further improve accuracy of the authentication.

### Second Embodiment

A second embodiment of the present disclosure will be described next. A configuration of the system 1 according to the second embodiment is similar to that in the first embodiment described above, and thus, description will be omitted.

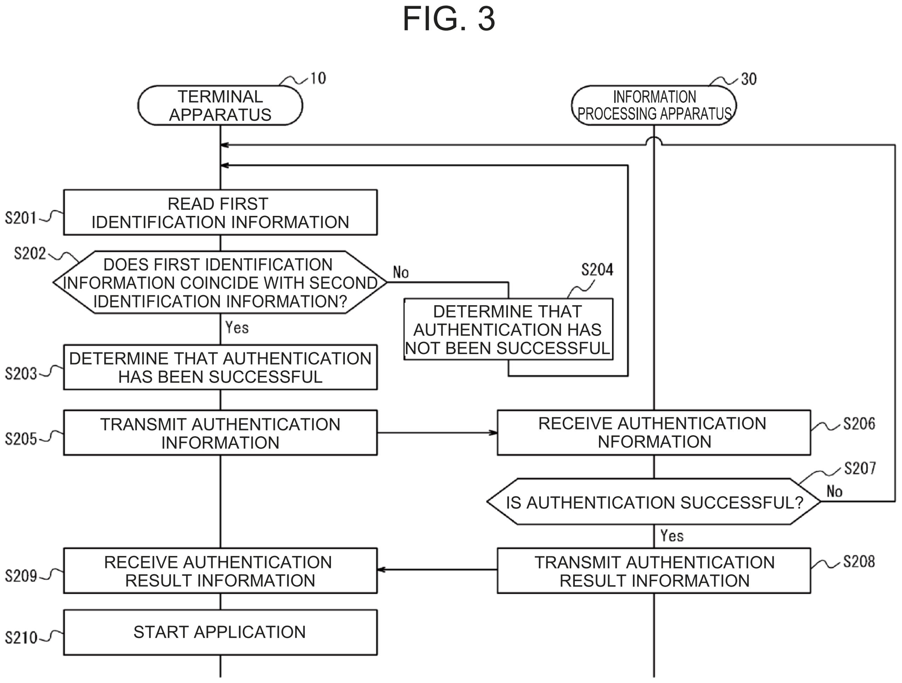

Hereinafter, operation of the system 1 according to the present embodiment will be described with reference to FIG. 3. Among the operation in FIG. 3, operation of the terminal apparatus 10 corresponds to a method according to the present embodiment. In the following description, it is assumed that the terminal apparatus 10 performs communication with external apparatuses via the communication unit 13 and the network 40. In the following description, the information processing apparatus 30 performs communication with external apparatuses via the communication unit 33 and the network 40.

Processing from S201 to S204 is similar to the processing from S101 to S104 in FIG. 2 according to the first embodiment described above, and thus, description will be omitted. Note that in S203, after the control unit 11 determines that the authentication using the smart key 20 or the authentication using the smart key 20 and the other smart key has been successful, the operation of the system 1 may proceed to S210, and the control unit 11 may start the application regarding the vehicle corresponding to the smart key 20.

In S205, the control unit 11 of the terminal apparatus 10 transmits authentication information to the information processing apparatus 30.

The authentication information may include code information indicating a code displayed at an output unit of the vehicle. In this case, the control unit 11 reads the code displayed at the output unit of the vehicle using a camera as the input unit 14. The control unit 11 transmits the authentication information including the code information indicating the read code to the information processing apparatus 30. The control unit of the vehicle, for example, receives an instruction to display the code from the information processing apparatus 30 via the communication unit and can display the code at the output unit.

The control unit of the vehicle may display the code at the output unit when both the smart key 20 located within a predetermined range from a position of the vehicle and another smart key different from the smart key 20 are detected, and it is determined that an engine has been started. The predetermined range may be set in advance and stored in advance in the storage unit of the vehicle. The control unit and the communication unit of the vehicle may detect the smart key 20 and the other smart key using near field communication such as Bluetooth. The engine may be started by the smart key 20 or another smart key or may be started by a master key of an employee of a store that sells the vehicle. The control unit of the vehicle may determine that the engine has been started, for example, based on information detected by a crank angle sensor.

The authentication information may include purchase information regarding purchase of the vehicle by the user. The purchase information includes a credit card number of the user, a receipt number upon purchase, and the like. The control unit 11, for example, accepts a user input of the purchase information via the input unit 14 and transmits the authentication information including the purchase information to the information processing apparatus 30 via the communication unit 13.

The authentication information may include biological information of the user. The control unit 11 accepts a user input of a physical feature specific to the user such as the face, the retina, the iris, the fingerprint and the vocal print via the input unit 14 and extracts a feature amount of the physical feature using an arbitrary image analysis method or speech analysis method, thereby acquiring the biological information. The control unit 11 transmits the authentication information including the biological information to the information processing apparatus 30 via the communication unit 13. The biological information may include an image itself indicating the face, or the like, of the user captured by the camera as the input unit 14, a speech itself indicating voice of the user detected by the microphone as the input unit 14, and the like, in place of or in addition to the feature amount.

The authentication information may include user position information indicating a position of the user. In this case, the control unit 11 transmits the authentication information including terminal position information acquired by the positioning unit 16 as the user position information to the information processing apparatus 30.

The authentication information may include password information indicating a password of the user. The control unit 11, for example, accepts a user input of the password information via the input unit 14 and transmits the authentication information including the password information to the information processing apparatus 30 via the communication unit 13.

In S206, the control unit 31 of the information processing apparatus 30 receives the authentication information.

In S207, the control unit 31 determines whether the authentication has been successful based on the authentication information. When it is determined that the authentication has been successful, the operation of the system 1 proceeds to S208. When it is determined that the authentication has not been successful, the operation of the system 1 returns to S201.

When the authentication information includes the code information, the control unit 31 determines whether the code for which the instruction to display is given to the vehicle matches the code indicated by the code information. When the code for which the instruction to display is given matches the code indicated by the code information, the control unit 31 determines that the authentication has been successful. When the code for which the instruction to display is given does not match the code indicated by the code information, the control unit 31 determines that the authentication has not been successful.

When the authentication information includes the purchase information, the control unit 31 specifies the purchase information of the user from a database which is stored in the storage unit 32 and in which purchase information of each user is accumulated, and determines whether the specified purchase information matches the purchase information included in the authentication information. When the specified purchase information matches the purchase information included in the authentication information, the control unit 31 determines that the authentication has been successful. When the specified purchase information does not match the purchase information included in the authentication information, the control unit 31 determines that the authentication has not been successful.

When the authentication information includes the biological information, the control unit 31 specifies the biological information of the user from a database which is stored in the storage unit 32 and in which biological information of each user is accumulated, and determines whether the specified biological information matches the biological information included in the authentication information. When the specified biological information matches the biological information included in the authentication information, the control unit 31 determines that the authentication has been successful. When the specified biological information does not match the biological information included in the authentication information, the control unit 31 determines that the authentication has not been successful. When the biological information includes an image itself indicating the face, or the like, of the user, a speech itself indicating voice of the user, or the like, the control unit 31 may extract a feature amount from the image or the speech using an arbitrary image analysis method or speech analysis method and may determine whether the feature amount matches the feature amount of the user accumulated in the database.

When the authentication information includes the user position information, the control unit 31 first receives the vehicle position information indicating the position of the vehicle from the vehicle via the communication unit 33. The vehicle position information is acquired by the positioning unit of the vehicle and transmitted to the information processing apparatus 30 by the control unit of the vehicle via the communication unit. When a distance between the position of the user indicated by the user position information and the position of the vehicle indicated by the vehicle position information is within a predetermined distance, the control unit 31 determines that the authentication has been successful. When the distance between the position of the user and the position of the vehicle is not within the predetermined distance, the control unit 31 determines that the authentication has not been successful. The predetermined distance may be set in advance and stored in the storage unit 32.

When the authentication information includes password information, the control unit 31 specifies the password information of the user from a database which is stored in the storage unit 32 and in which password information of each user is accumulated and determines whether the specified password information matches the password information included in the authentication information. When the specified password information matches the password information included in the authentication information, the control unit 31 determines that the authentication has been successful. When the specified password information does not match the password information included in the authentication information, the control unit 31 determines that the authentication has not been successful.

Processing from S208 to S210 is similar to the processing from S107 to S109 in FIG. 2 according to the first embodiment described above, and thus, description will be omitted.

According to the present embodiment, by using the authentication information, authentication can be performed also at the information processing apparatus 30 in addition to the terminal apparatus 10, so that it is possible to further improve accuracy of the authentication.

The methods according to the first embodiment and the second embodiment described above may be freely combined and employed in determination as to whether the authentication has been successful in the system 1.

The present disclosure is not limited to the embodiments described above. For example, two or more blocks illustrated in the block diagram may be integrated or one block illustrated in the block diagram may be divided. Instead of executing two or more steps indicated in the flowchart in chronological order in accordance with the description, the two or more steps may be executed in parallel or in a different order according to the processing capacity of apparatuses that execute each of the steps or as needed. Other than the above, changes can be made without departing from the gist of the present disclosure.

Some of the embodiments of the present disclosure will be exemplified below. However, it should be noted that the embodiments of the present disclosure are not limited to these.

### Supplement 1

A system including: a terminal apparatus including a storage unit that stores first identification information for identifying a user, a communication unit that performs communication with a smart key that corresponds to a vehicle of the user and is held by the user, and a control unit; and
the smart key including an NFC tag that stores second identification information for identifying the user, in which
the control unit of the terminal apparatus
reads the second identification information from the NFC tag via the communication unit, and
determines whether the first identification information matches the second identification information, and when the first identification information matches the second identification information, authenticates the user and starts an application regarding the vehicle.

### Supplement 2

A terminal apparatus including: a storage unit that stores first identification information for identifying a user;
a communication unit that performs communication with a smart key including an NFC tag that stores second identification information for identifying the user, the smart key corresponding to a vehicle of the user and being held by the user; and
a control unit that reads the second identification information from the NFC tag via the communication unit,
determines whether the first identification information matches the second identification information, and when the first identification information matches the second identification information, authenticates the user.

### Supplement 3

The terminal apparatus according to Supplement 2, in which
the control unit starts an application regarding the vehicle when the user has been authenticated.

### Supplement 4

The terminal apparatus according to Supplement 2 or 3, in which
each of the first identification information and the second identification information includes a national identification number.

### Supplement 5

The terminal apparatus according to any one of Supplement 2 to Supplement 4, in which
the communication unit further performs communication with an information processing apparatus; and
the control unit
authenticates the user when the first identification information matches the second identification information, and authentication result information indicating that the user has been authenticated based on feature information indicating action of the user included in a video captured by a camera included in the vehicle is received from the information processing apparatus.

### Supplement 6

The terminal apparatus according to Supplement 5, in which
the action of the user includes at least one of how the user walks, a way of opening/closing a door of the vehicle, a way of sitting on a seat of the vehicle, a way of gripping a steering wheel of the vehicle, and a way of adjusting a mirror of the vehicle.

### Supplement 7

The terminal apparatus according to any one of Supplement 2 to Supplement 6, further including:
an input unit including a camera, in which
the communication unit further performs communication with an information processing apparatus, and
the control unit
reads a code displayed at an output unit included in the vehicle via the camera,
transmits code information indicating the read code to the information processing apparatus, and
authenticates the user when the first identification information matches the second identification information, and authentication result information indicating that the user has been authenticated based on the code information is received from the information processing apparatus.

### Supplement 8

The terminal apparatus according to Supplement 7, in which
the code is displayed at the output unit of the vehicle when the vehicle detects both the smart key located within a predetermined range from a position of the vehicle and another smart key different from the smart key, the other smart key corresponding to the vehicle and being further held by the user, and it is determined an engine has been started.

### Supplement 9

The terminal apparatus according to any one of Supplement 2 to Supplement 8, in which
the communication unit further performs communication with another smart key different from the smart key, the other smart key corresponding to the vehicle and being further held by the user,
the other smart key includes an NFC tag that stores third identification information for identifying the user, and
the control unit
reads the second identification information from the NFC tag via the communication unit, and
authenticates the user when the first identification information matches the second identification information, and the first identification information matches the third identification information.

### Supplement 10

The terminal apparatus according to any one of Supplement 2 to Supplement 9, in which
the communication unit further performs communication with an information processing apparatus, and
the control unit
transmits terminal position information indicating a position of the terminal apparatus to the information processing apparatus via the communication unit, and
authenticates the user when the first identification information matches the second identification information, and authentication result information indicating that the user has been authenticated based a position of the vehicle and the position of the terminal apparatus is received from the information processing apparatus.

### Supplement 11

The terminal apparatus according to any one of Supplement 2 to Supplement 10, in which
the communication unit further performs communication with an information processing apparatus, and
the control unit
transmits purchase information regarding purchase of the vehicle to the information processing apparatus via the communication unit, and
authenticates the user when the first identification information matches the second identification information and authentication result information indicating that the user has been authenticated based on the purchase information is received from the information processing apparatus.

### Supplement 12

The terminal apparatus according to any one of Supplement 2 to Supplement 11, further including
an input unit, in which
the communication unit further performs communication with an information processing apparatus, and
the control unit accepts a user input of biological information of the user via the input unit and transmits the biological information to the information processing apparatus, and authenticates the user when the first identification information matches the second identification information, and authentication result information indicating that the user has been authenticated based on the biological information is received from the information
processing apparatus.

### Supplement 13

The terminal apparatus according to Supplement 12, in which
the biological information includes an image including a face of the user.

### Supplement 14

The terminal apparatus according to any one of Supplement 2 to Supplement 13, further including
an input unit, in which
the communication unit further performs communication with an information processing apparatus, and
the control unit accepts a user input of a password via the input unit and transmits password information indicating the password to the information processing apparatus, and
authenticates the user when the first identification information matches the second identification information, and authentication result information indicating that the user has been authenticated based on the password information is received from the information processing apparatus.

### Supplement 15

A method to be executed by a terminal apparatus including a storage unit that stores first identification information for identifying a user, a communication unit, and a control unit, the method including:
by the terminal apparatus,
performing communication with a smart key including an NFC tag that stores second identification information for identifying the user via the communication unit, the smart key corresponding to a vehicle of the user and being held by the user;
reading the second identification information from the NFC tag; and
determining whether the first identification information matches the second identification information, and when the first identification information matches the second identification information, authenticating the user.

### Supplement 16

The method according to Supplement 15, further including
by the terminal apparatus, starting an application regarding the vehicle when the user has been authenticated.

### Supplement 17

The method according to supplement 15 or 16, in which
each of the first identification information and the second identification information includes a national identification number.

### Supplement 18

The method according to any one of Supplement 15 to Supplement 17, further including:
by the terminal apparatus,
further performing communication with an information processing apparatus; and
authenticating the user when the first identification information matches the second identification information, and authentication result information indicating that the user has been authenticated based on feature information indicating action of the user included in a video captured by a camera included in the vehicle is received from the information processing apparatus.

### Supplement 19

The method according to Supplement 18, in which
the action of the user includes at least one of how the user walks, a way of opening/closing a door of the vehicle, a way of sitting on a seat of the vehicle, a way of gripping a steering wheel of the vehicle, and a way of adjusting a mirror of the vehicle.

### Supplement 20

The method according to any one of Supplement 15 to Supplement 19, in which:
the terminal apparatus further includes an input unit including a camera; and
the method further includes: by the terminal apparatus,
further performing communication with an information processing apparatus;
reading a code displayed at an output unit included in the vehicle via the camera;
transmitting code information indicating the read code to the information processing apparatus; and
authenticating the user when the first identification information matches the second identification information, and authentication result information indicating that the user has been authenticated based on the code information is received from the information processing apparatus.

## Claims

1. A system (1) comprising:
a terminal apparatus (10) including a memory (12) that stores first identification information for identifying a user, a communication unit (13) that performs communication with a smart key (20) that corresponds to a vehicle of the user and is held by the user, and a control unit (11); and
the smart key (20) including an NFC tag that stores second identification information for identifying the user, wherein
the control unit (11) of the terminal apparatus (10) is configured to:
read the second identification information from the NFC tag via the communication unit (13); and
determine whether the first identification information matches the second identification information, and when the first identification information matches the second identification information, authenticate the user and start an application regarding the vehicle.

2. A terminal apparatus (10) comprising:
a memory that stores first identification information for identifying a user;
a communication unit (13) that performs communication with a smart key (20) including an NFC tag that stores second identification information for identifying the user, the smart key corresponding to a vehicle of the user and being held by the user; and
a control unit (11) that is configured to:
read the second identification information from the NFC tag via the communication unit (13); and
determine whether the first identification information matches the second identification information, and when the first identification information matches the second identification information, authenticate the user.

3. The terminal apparatus (10) according to claim 2, wherein
the control unit (11) is configured to start an application regarding the vehicle when the user has been authenticated.

4. The terminal apparatus (10) according to claim 2 or 3, wherein
each of the first identification information and the second identification information includes a national identification number.

5. The terminal apparatus (10) according to claim 2 or 3, wherein:
the communication unit (13) further performs communication with an information processing apparatus (30);
the control unit (11) is configured to
authenticate the user when the first identification information matches the second identification information, and authentication result information is received from the information processing apparatus (30);
the authentication result information indicates that the user has been authenticated based on feature information; and
the feature information indicates action of the user included in a video captured by a camera included in the vehicle.

6. The terminal apparatus (10) according to claim 5, wherein
the action of the user includes at least one of how the user walks, a way of opening and/or closing a door of the vehicle, a way of sitting on a seat of the vehicle, a way of gripping a steering wheel of the vehicle, and a way of adjusting a mirror of the vehicle.

7. The terminal apparatus (10) according to claim 2 or 3, further comprising an input unit (14) including a camera, wherein:
the communication unit (13) further performs communication with an information processing apparatus (30);
the control unit (11) is configured to:
read a code displayed at an output unit (15) included in the vehicle via the camera;
transmit a code information indicating a read code to the information processing apparatus (30); and
authenticate the user when the first identification information matches the second identification information, and authentication result information is received from the information processing apparatus (30); and
the authentication result information indicates that the user has been authenticated based on the code information.

8. The terminal apparatus (10) according to claim 7, wherein
the code is configured to be displayed at the output unit (15) of the vehicle when the vehicle detects both the smart key (20) located within a predetermined range from a position of the vehicle and another smart key different from the smart key (20), the other smart key corresponding to the vehicle and being further held by the user, and it is determined that an engine has been started.

9. The terminal apparatus (10) according to claim 2 or 3, wherein:
the communication unit (13)
further performs communication with another smart key different from the smart key (20), the other smart key corresponding to the vehicle and being further held by the user;
the other smart key includes an NFC tag that stores third identification information for identifying the user; and
the control unit (11)
reads the second identification information from the NFC tag via the communication unit (13), and
authenticates the user when the first identification information matches the second identification information, and the first identification information matches the third identification information.

10. The terminal apparatus according to claim 2 or 3, wherein:
the communication unit (13) further performs communication with an information processing apparatus (30);
the control unit (11)
transmits terminal position information (10) indicating a position of the terminal apparatus (10) to the information processing apparatus (30) via the communication unit (13);
authenticates the user when the first identification information matches the second identification information, and authentication result information is received from the information processing apparatus (30); and
the authentication result information indicates that the user has been authenticated based on a position of the vehicle and the position of the terminal apparatus (10).

11. The terminal apparatus (10) according to claim 2 or 3, wherein:
the communication unit (13) further performs communication with an information processing apparatus (30);
the control unit (11) is configured to:
transmit purchase information regarding purchase of the vehicle to the information processing apparatus (30) via the communication unit (13); and
authenticate the user when the first identification information matches the second identification information, and authentication result information is received from the information processing apparatus (30); and
the authentication result information indicates that the user has been authenticated based on the purchase information.

12. The terminal apparatus (10) according to claim 2 or 3, further comprising
an input unit (14), wherein:
the communication unit (13) further performs communication with an information processing apparatus (30);
the control unit (11) is configured to:
accept a user input of biological information of the user via the input unit (14) and transmit the biological information to the information processing apparatus (30); and
authenticate the user when the first identification information matches the second identification information, and authentication result information is received from the information processing apparatus (30); and
the authentication result information indicates that the user has been authenticated based on the biological information.

13. A method to be executed by a terminal apparatus (10) including a memory that stores first identification information for identifying a user, a communication unit (13), and a control unit (11),
the method comprising:
performing communication with a smart key including an NFC tag that stores second identification information for identifying the user via a communication unit (13), the smart key corresponding to a vehicle of the user and being held by the user;
reading the second identification information from the NFC tag; and
determining whether the first identification information matches the second identification information, and when the first identification information matches the second identification information, authenticating the user.

14. The method according to claim 13, further comprising
by the terminal apparatus (10), starting an application regarding the vehicle when the user has been authenticated.

15. The method according to claim 13 or 14, wherein
each of the first identification information and the second identification information includes a national identification number.
